# EUROPEAN PATENT SPECIFICATION

(11) **EP 4 144 559 B1**
(45) Date of publication and mention of the grant of the patent: **11.11.2026**
(21) Application number: 21195116.5
(22) Date of filing: 06.09.2021
(51) Int. Cl.: B60K 35/10, B60K 35/23, B60K 35/28, B60K 35/60, B60K 35/65, B60K 35/80, B60K 35/81

(54) **METHOD, COMPUTER PROGRAM AND APPARATUS FOR CONTROLLING DISPLAY OF INFORMATION IN A MOTOR VEHICLE**
VERFAHREN, COMPUTERPROGRAMM UND VORRICHTUNG ZUR STEUERUNG DER ANZEIGE VON INFORMATIONEN IN EINEM KRAFTFAHRZEUG
PROCÉDÉ, PROGRAMME INFORMATIQUE ET APPAREIL POUR COMMANDER L'AFFICHAGE D'INFORMATIONS DANS UN VÉHICULE À MOTEUR

(43) Date of publication of application: 08.03.2023
(73) Proprietor: VOLKSWAGEN AG, 38440 Wolfsburg (DE)
(72) Inventor: Vieira, Eduardo Luiz, 10117 Berlin (DE); Lee, Hyunmin, 38100 Braunschweig (DE); Schriever, David, 38440 Wolfsburg (DE)

(56) References cited:
- EP-A1- 2 858 334
- US-A1- 2016 320 900
- US-A1- 2018 001 767
- US-A1- 2018 273 050
- US-B2- 10 027 759

## Description

The present invention is related to a method, a computer program, and an apparatus for controlling display of information in a motor vehicle. The invention is further related to a motor vehicle, which makes use of such a method or apparatus.

Modern motor vehicles are provided with an ever-increasing number of assistance systems. While such assistance systems increase the safety during operation of the motor vehicle, they come at the cost that an increasing amount of information needs to be conveyed to an operator of the motor vehicle. In addition, the operator needs to be able to control settings of at least some of these assistance systems, which means that an increasing number of control elements needs to be provided. Alternatively, the settings can be controlled using menus or submenus provided by an infotainment system. While this reduced the number of required control elements, finding a desired setting in a menu structure may be cumbersome.

In this regard, DE 10 2010 047 778 A1 discloses a method implemented in an operating system for controlling a plurality of driver assistance systems in a vehicle. The operating system comprises an operating device for detecting user inputs and a control device for actuating the driver assistance systems. The control device is designed to detect activation information for the plurality of driver assistance systems on the basis of the user inputs.

DE 10 2019 119 135 A1 discloses a method for using a control unit of a steering wheel of a motor vehicle for a first control target and/or a second control target. After receiving a first signal representing a request to assign a control element of the control unit to the first control destination, the control element is assigned to the first control destination. When a second signal representing a request to assign the control element to the second control destination is received, the control element is assigned to the second control destination.

One possibility to convey information to an operator of a motor vehicle is the use of a head-up-display. For example, DE 10 2013 006 496 A1 discloses a method for operating a motor vehicle by means of a driver assistance system. The driver assistance system comprises a display device and an input element. The display device comprises a head-up display and a screen. For a simple operation of the driver assistance system, a selection element is first displayed only by means of the head-up display. The selection element may be shifted by means of the input element in the direction of the screen and onto the screen.

Apart from the increasing number of assistance systems, modern motor vehicles often offer the possibility to connect mobile user devices to the vehicle, such as smartphones or tablets, e.g. in order to access audio files stored on such devices or to enable phone calls. However, the operation of such mobile user devices by the operator of the motor vehicle causes a distraction of the operator, which poses a potential security risk.

US 2018/0001767 A1 discloses an information display system for a vehicle. The information display system includes a steering wheel including a ring portion and a upper opening region within the ring portion, an instrument cluster arrangement positioned forward of the steering wheel and including gauges positioned such that a portion of the gauges is visible through the upper opening region of the steering wheel, a holder configured to receive a handheld device, the holder being positioned adjacent to the one or more gauges such that the handheld device being placed on the holder is visible through the upper opening region, and an electronic control unit configured to communicate with the handheld device positioned in the holder to display information associated with the vehicle on the handheld device.

US 10,027,759 B2 discloses a method for providing original equipment manufacturer (OEM) human-machine interface (HMI) device operation of a non-OEM handheld mobile device. The method includes processing an access request received via a vehicle network. An HMI control unit transmits, in response to the access request, an HMI configuration request that corresponds to the OEM HMI device. The HMI control unit receives, in response to the HMI configuration request, an HMI mapping assignment that corresponds with the OEM HMI device. The HMI control unit applies the HMI mapping assignment to OEM HMI device data to produce non-OEM HMI data, in which the OEM HMI device data being operable to manipulate at least one application function of the non-OEM handheld mobile device.

US 2016/0320900 A1 discloses an operating device that includes a communication unit that performs communication with an electronic device as the object of operation, a display control unit that acquires, via the communication unit, a first display image displayed by the electronic device, and that outputs, to a display device mounted on a vehicle, display control information for displaying a second display image based on the acquired first display image, an operation detection unit that is disposed on a steering wheel of the vehicle and that outputs detection information based on detection of an operation performed on an operation plane, and a control unit that generates operation information on the basis of the detection information acquired from the operation detection unit and that outputs the operation information to the electronic device.

It is an object of the present invention to provide improved solutions for controlling display of information in a motor vehicle.

This object is achieved by a method according to claim 1, by a computer program according to claim 8, which implements such a method, and by an apparatus according to claim 9. This object is further achieved by a motor vehicle according to claim 10. The dependent claims include advantageous further developments and improvements of the present principles as described below.

According to a first aspect, a method for controlling display of information in a motor vehicle comprises:
- establishing a connection between a mobile user device and the motor vehicle responsive to placing the mobile user device in a dedicated area in a dashboard of the motor vehicle;
- associating at least a first control button of the motor vehicle with an application running on the mobile user device;
- associating a second control button of the motor vehicle with a head-up display of the motor vehicle;
- modifying information displayed by the application running on the mobile user device responsive to a user input via the first control button;
- modifying information displayed by the head-up display responsive to a user input via the second control button; and
- modifying content displayed by the head-up display responsive to a user input via a user interface of the mobile user device.

Accordingly, a computer program comprises instructions, which, when executed by a computer, cause the computer to perform the following steps for controlling display of information in a motor vehicle:
- establishing a connection between a mobile user device and the motor vehicle responsive to placing the mobile user device in a dedicated area in a dashboard of the motor vehicle;
- associating at least a first control button of the motor vehicle with an application running on the mobile user device;
- associating a second control button of the motor vehicle with a head-up display of the motor vehicle;
- modifying information displayed by the application running on the mobile user device responsive to a user input via the first control button;
- modifying information displayed by the head-up display responsive to a user input via the second control button; and
- modifying content displayed by the head-up display responsive to a user input via a user interface of the mobile user device.

The term computer has to be understood broadly. In particular, it also includes electronic control units, embedded systems, and other processor-based data processing devices.

The computer program can, for example, be made available for electronic retrieval or stored on a computer-readable storage medium.

According to another aspect, an apparatus for controlling display of information in a motor vehicle comprises:
- a connecting unit configured to establish a connection between a mobile user device and the motor vehicle responsive to placing the mobile user device in a dedicated area in a dashboard of the motor vehicle; and
- a processing unit configured to associate at least a first control button of the motor vehicle with an application running on the mobile user device, to associate a second control button of the motor vehicle with a head-up display of the motor vehicle, to modify information displayed by the application running on the mobile user device responsive to a user input via the first control button, to modify information displayed by the head-up display responsive to a user input via the second control button, and to modify content displayed by the head-up display responsive to a user input via a user interface of the mobile user device.

According to the invention, a mobile user device is coupled with the motor vehicle in such a way that at least one control button of the motor vehicle is assigned to operate the mobile user device. In this way, the user is able to modify information displayed by an application running on the mobile user device without the need to interact directly with the mobile user device, i.e., without the need to pick up the device. This leads to a pleasant user experience and to an increased safety when the mobile user device is operated during operation of the motor vehicle. The connection between the mobile user device and the motor vehicle is established responsive to placing the mobile user device in a dedicated area in a dashboard of the motor vehicle. This solution has the advantage that the user does not need to establish a connection manually. It is sufficient if the mobile user device is placed in a designated area. In case the user does not want to establish a connection, they may simply place the mobile user device somewhere else. Of course, the mobile user device needs to be paired once with the motor vehicle so that it is automatically recognized from then on.

According to the invention, a second control button of the motor vehicle is associated with a head-up display of the motor vehicle when the connection between the mobile user device and the motor vehicle is established. Information displayed by the head-up display is then modified responsive to a user input via the second control button. In this way, the user has the possibility to easily modify the way that information is displayed by the head-up display without the need to access any particular menus provided by an infotainment system of the motor vehicle.

According to the invention, content displayed by the head-up display is also modified responsive to a user input via a user interface of the mobile user device. Users today are accustomed to operating all kinds of devices using applications running on their own mobile devices. The users are thus able to easily adapt the content displayed by the head-up display, e.g. information provided by different assistance systems, according to their needs and preferences.

In an advantageous embodiment, the dedicated area in the dashboard of the motor vehicle is a magnetic area that is configured to secure the mobile user device. In this way, the mobile user device is reliably secured in the dedicated area and will not be inadvertently moved out of the dedicated area during operation of the motor vehicle.

In an advantageous embodiment, the first control button and the second control button are arranged in a steering wheel of the motor vehicle. Modern motor vehicles are usually equipped with a variety of control buttons in the steering wheel. Operators of such motor vehicles are thus accustomed to controlling system settings with those control buttons. In addition, control buttons arranged in the steering wheel have the advantage that they can be operated while maintaining attention on the surrounding traffic, i.e., the user does not need to direct their attention to the control button they want to operate.

In an advantageous embodiment, the first control button and the second control button are configured to be operated by swiping movements. Users are well accustomed to using swiping movements for operating smartphones and tablets. The transfer of this operating principle to control actions in a motor vehicle therefore has the advantage that the user can intuitively control the system.

In an advantageous embodiment, modifying information displayed by the application running on the mobile user device comprises switching between different application screens. Preferably, the different application screens include at least a media screen and a navigation screen. In this way, the user is able to easily switch between the applications screens that are most relevant to the user.

In an advantageous embodiment, modifying information displayed by the head-up display comprises increasing or reducing an amount of information displayed by the head-up display. In this way, the user is able to reduce distraction caused by the information displayed by the head-up display by simply reducing the amount of information that is displayed. If the user has the need to obtain additional information, they can easily increase the amount of information that is displayed.

Advantageously, a mobile user device is configured to be used in a method according to the invention. To this end, the mobile user device is configured to be connected to a motor vehicle and to modify information displayed by an application running on the mobile user device responsive to a user input via a first control button of the motor vehicle. For example, the mobile user device may be a smartphone or a tablet. Using a button of the motor vehicle for controlling information displayed by the mobile user device has the advantage that the distraction of the user caused by operating the mobile user device is reduced.

Advantageously, a motor vehicle comprises an apparatus according to the invention or is configured to perform a method according to the invention for controlling display of information in the motor vehicle. For example, the motor vehicle may be a car, a bus, or a commercial vehicle, e.g. a truck. More generally, the invention can be used in land vehicles, rail vehicles, watercrafts, and aircrafts.

Further features of the present invention will become apparent from the following description and the appended claims in conjunction with the figures.
- Fig. 1: schematically illustrates a method for controlling display of information in a motor vehicle;
- Fig. 2: schematically illustrates a first embodiment of an apparatus for controlling display of information in a motor vehicle;
- Fig. 3: schematically illustrates a second embodiment of an apparatus for controlling display of information in a motor vehicle;
- Fig. 4: shows a motor vehicle suitable for use with the described solution;
- Fig. 5: shows an interior of the motor vehicle of Fig. 4;
- Fig. 6: shows a mobile user device suitable for use with the described solution; and
- Fig. 7: shows a block diagram of an electronics system of a motor vehicle.

The present description illustrates the principles of the present invention. It will thus be appreciated that those skilled in the art will be able to devise various arrangements that, although not explicitly described or shown herein, embody the principles of the invention.

All examples and conditional language recited herein are intended for educational purposes to aid the reader in understanding the principles of the invention and the concepts contributed by the inventor to furthering the art, and are to be construed as being without limitation to such specifically recited examples and conditions.

Moreover, all statements herein reciting principles, aspects, and embodiments of the invention, as well as specific examples thereof, are intended to encompass both structural and functional equivalents thereof. Additionally, it is intended that such equivalents include both currently known equivalents as well as equivalents developed in the future, i.e., any elements developed that perform the same function, regardless of structure.

Thus, for example, it will be appreciated by those skilled in the art that the diagrams presented herein represent conceptual views of illustrative circuitry embodying the principles of the invention.

The functions of the various elements shown in the figures may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, read only memory (ROM) for storing software, random access memory (RAM), and nonvolatile storage.

Other hardware, conventional and/or custom, may also be included. Similarly, any switches shown in the figures are conceptual only. Their function may be carried out through the operation of program logic, through dedicated logic, through the interaction of program control and dedicated logic, or even manually, the particular technique being selectable by the implementer as more specifically understood from the context.

In the claims hereof, any element expressed as a means for performing a specified function is intended to encompass any way of performing that function including, for example, a combination of circuit elements that performs that function or software in any form, including, therefore, firmware, microcode or the like, combined with appropriate circuitry for executing that software to perform the function. The invention as defined by such claims resides in the fact that the functionalities provided by the various recited means are combined and brought together in the manner which the claims call for. It is thus regarded that any means that can provide those functionalities are equivalent to those shown herein.

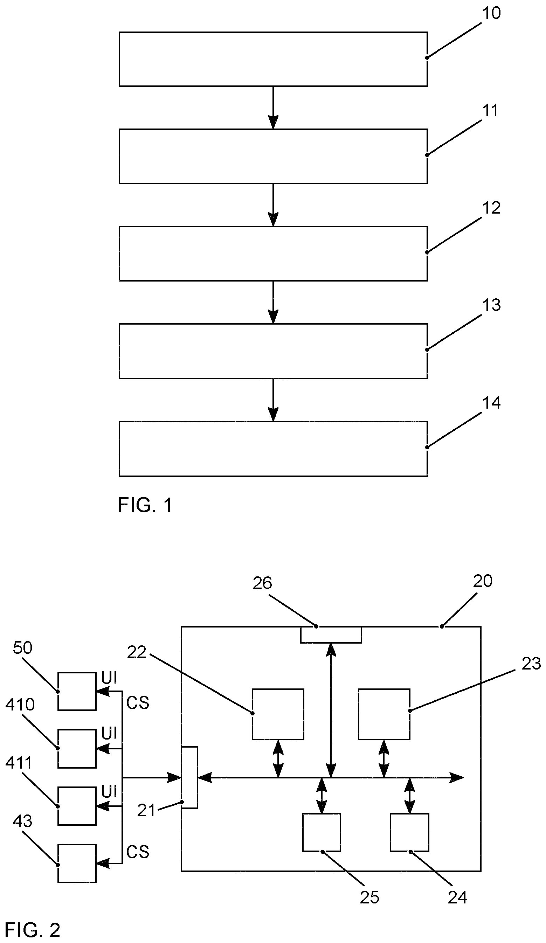

Fig. 1 schematically illustrates a method according to the invention for controlling display of information in a motor vehicle. In a first step, a connection between a mobile user device and the motor vehicle is established 10. The connection is established 10 responsive to placing the mobile user device in a dedicated area in a dashboard of the motor vehicle, e.g. a magnetic area. At least a first control button of the motor vehicle is then associated 11 with an application running on the mobile user device. Furthermore, a second control button of the motor vehicle is associated 12 with a head-up display of the motor vehicle. Advantageously, the first control button and the second control button are arranged in a steering wheel of the motor vehicle. Preferably, they are configured to be operated by swiping movements. Responsive to a user input via the first control button, information displayed by the application running on the mobile user device is modified 13. For example, a switching between different application screens may be performed, such as between a media screen and a navigation screen. Accordingly, responsive to a user input via the second control button, information displayed by the head-up display is modified 14. For example, an amount of information displayed by the head-up display may be increased or reduced. Content displayed by the head-up display is modified responsive to a user input via a user interface of the mobile user device.

Fig. 2 schematically illustrates a block diagram of a first embodiment of an apparatus 20 according to the invention for controlling display of information in a motor vehicle. The apparatus 20 has an interface 21, via which a connecting unit 22 establishes a connection between a mobile user device 50 and the motor vehicle. The connection is established responsive to placing the mobile user device in a dedicated area in a dashboard of the motor vehicle, e.g. a magnetic area. A processing unit 23 is configured to associate at least a first control button 410 of the motor vehicle with an application running on the mobile user device 50, and to modify information displayed by the application running on the mobile user device 50 responsive to a user input UI via the first control button 410. For this purpose, the processing unit 23 may provide a respective control signal CS to the mobile user device 50 via the interface 21. For example, a switching between different application screens may be performed, such as between a media screen and a navigation screen. The processing unit 23 is further configured to associate a second control button 411 of the motor vehicle with a head-up display 43 of the motor vehicle, and to modify information displayed by the head-up display 43 responsive to a user input UI via the second control button 411. For this purpose, the processing unit 23 may provide a respective control signal CS to the head-up display 43 via the interface 21. For example, an amount of information displayed by the head-up display may be increased or reduced. Content displayed by the head-up display 43 is also modified responsive to a user input UI via a user interface of the mobile user device 50. A local storage unit 25 is provided, e.g. for storing data during processing. The interface 21 may likewise be spilt into an input and an output. Advantageously, the first control button 410 and the second control button 411 are arranged in a steering wheel of the motor vehicle. Preferably, they are configured to be operated by swiping movements.

The connecting unit 22 and the processing unit 23 may be controlled by a control unit 24. A user interface 26 may be provided for enabling a user to modify settings of the connecting unit 22, the processing unit 23, or the control unit 24. The various units 22-24 can be embodied as dedicated hardware units. Of course, they may likewise be fully or partially combined into a single unit or implemented as software running on a processor, e.g. a CPU or a GPU.

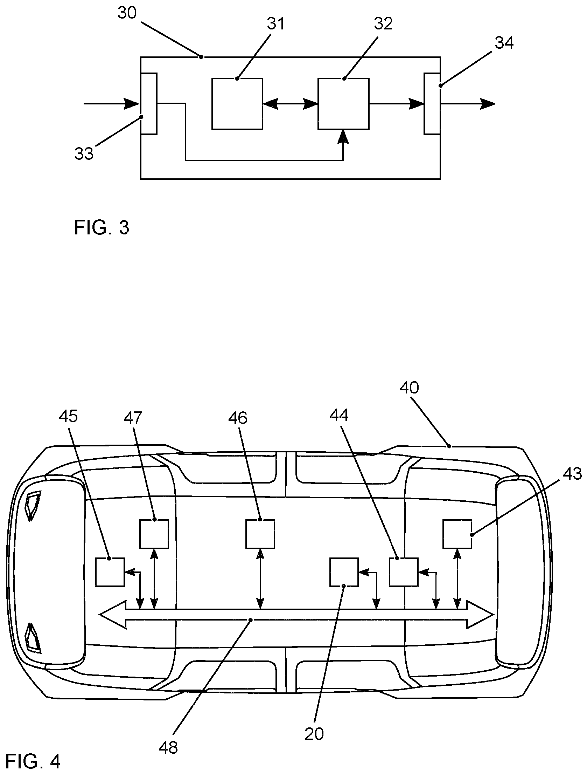

A block diagram of a second embodiment of an apparatus 30 according to the invention for controlling display of information in a motor vehicle is illustrated in Fig. 3. The apparatus 30 comprises a processing device 31 and a memory device 32. For example, the apparatus 30 may be a computer, an embedded system, or an electronic control unit. The memory device 32 has stored instructions that, when executed by the processing device 31, cause the apparatus 30 to perform steps according to one of the described methods. The instructions stored in the memory device 32 thus tangibly embody a program of instructions executable by the processing device 31 to perform program steps as described herein according to the present principles. The apparatus 30 has an input 33 for receiving data. Data generated by the processing device 31 are made available via an output 34. In addition, such data may be stored in the memory device 32. The input 33 and the output 34 may be combined into a single bidirectional interface.

The processing device 31 as used herein may include one or more processing units, such as microprocessors, digital signal processors, or a combination thereof.

The local storage unit 25 and the memory device 32 may include volatile and/or non-volatile memory regions and storage devices such as hard disk drives, optical drives, and/or solid-state memories.

Fig. 4 shows a motor vehicle 40 suitable for use with the described solution. In this example, the motor vehicle 40 is a car. The motor vehicle 40 comprises a head-up display 43 that is configured to provide information to an operator of the motor vehicle. The motor vehicle 40 further comprises a plurality of sensor units 44, e.g. a camera, a radar sensor, and an ultrasound sensor. Of course, other types of sensor units may likewise be used, such as a laser scanner or a lidar sensor. A data transmission unit 45 is provided, e.g. for exchanging data with other motor vehicles or with a service provider. For this purpose, the data transmission unit 45 may make use of known communication technologies, such as IEEE802.11p or 3GPP C-V2X. For storing data, a local storage unit 46 is provided. The various components of the motor vehicle 40 may be controlled by a control unit 47. Data exchange between the components of the motor vehicle 40 is performed via a network 48. For controlling display of information in the motor vehicle 40, an apparatus 20 according to the invention is provided.

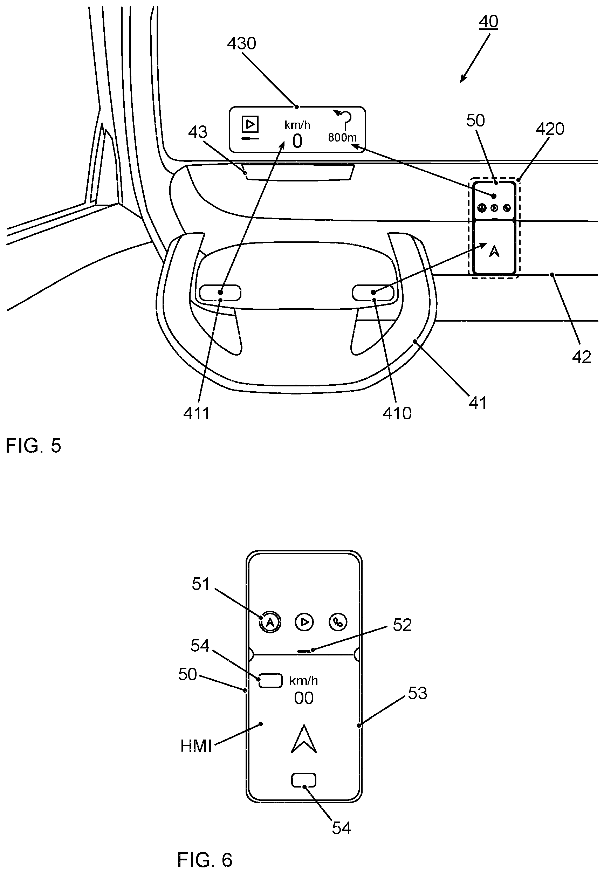

Fig. 5 shows an interior of the motor vehicle 40 of Fig. 4. As can be seen, a user has placed a mobile user device 50 in a dedicated magnetic area 420 of a dashboard 42 of the motor vehicle 40. As a result, a connection has been established between the mobile user device 50 and the motor vehicle 40. A first control button 410 arranged in a steering wheel 41 of the motor vehicle 40 has been associated with an application running on the mobile user device 50, as indicated by the arrow between the first control button 410 and the mobile user device 50. A second control button 411 arranged in the steering wheel 41 has been associated with a head-up display 43 of the motor vehicle 40, as indicated by the arrow between the second control button 411 and a display area 430 of the head-up display 43. Both control buttons 410, 411 are preferably configured to be operated by swiping movements. Using the control buttons 410, 411, the user can easily control the information that is displayed by the mobile user device 50 and in the display area 430 of the head-up display 43. For example, with a swiping movement on the first control button 410, the main view of the application can be switched, i.e., the application screen, e.g. between a navigation screen and a media screen. Similarly, with a swiping movement on the second control button 411, the amount of information displayed in the display area 430 of the head-up display 43 can be increased or reduced. Advantageously, the content displayed in the display area 430, i.e., the desired features of the assistance systems available in the motor vehicle 40, can be controlled by the application running on the mobile user device 50. This is indicated by the arrow between the mobile user device 50 and the display area 430.

Fig. 6 shows a mobile user device 50 suitable for use with the described solution. In this example, the mobile user device 50 is a smartphone. The mobile user device 50 shows a user interface HMI with a number of buttons 51 for various application screens of an application running on the mobile user device 50. As can be seen, buttons 51 for selecting a navigation screen, a media screen, and a connectivity screen can be activated. The currently active screen is the navigation screen. Further buttons 51 may be available by scrolling the buttons 51 to the left or to the right, as indicated by a scroll bar 52. The relevant information for a given application screen is depicted in an information window 53 of the user interface HMI. The mobile user device 50 is configured to be connected to a motor vehicle and to modify the information displayed in the information window 53 responsive to a user input via a first control button of the motor vehicle. For example, a switching between the different application screens may be performed. Advantageously, also content displayed by a head-up display may be modified responsive to a user input via the user interface HMI of the mobile user device 50. In this example, the user interface HMI comprises further buttons 54, which may be used for increasing or reducing the amount of information displayed in the display area of the head-up display, e.g. by activating a "minimum information" mode, in which only the most basic information is shown.

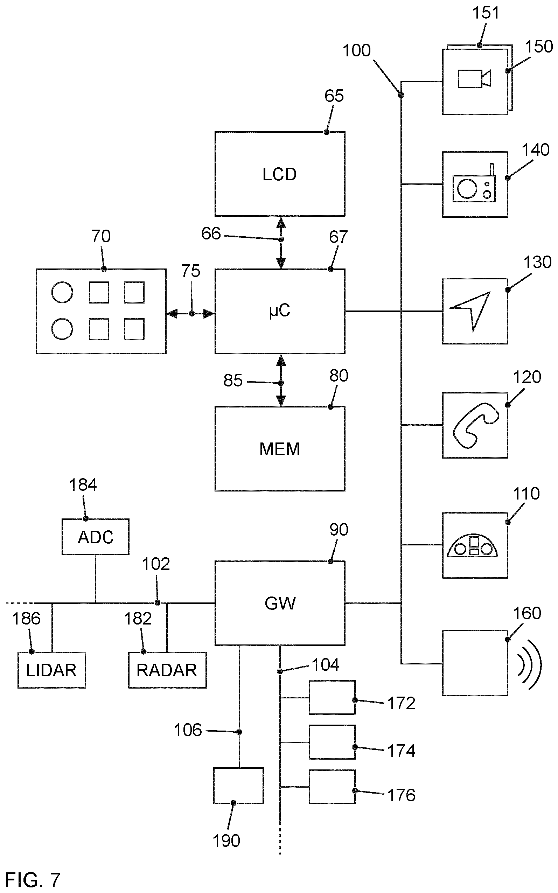

Fig. 7 schematically shows a block diagram of a board electronics system of a motor vehicle. Part of the board electronics system is an infotainment system, which comprises a touch-sensitive display unit 65, a computing device 67, an input unit 70, and a memory device 80. The display unit 65 is connected to the computing device 67 via a data line 66 and includes both a display area for displaying variable graphical information and an operator interface (touch-sensitive layer) arranged above the display area for inputting commands by a user. The input unit 70 is connected to the computing device 67 via a data line 75.

The memory device 80 is connected to the computing device 67 via a data line 85. In the memory device 80, a pictogram directory and/or symbol directory is deposited with pictograms and/or symbols for possible overlays of additional information.

The other parts of the infotainment system, such as a camera 150, radio 140, navigation device 130, telephone 120 and instrument cluster 110 are connected via a data bus 100 with the computing device 60. As data bus 100, the high-speed variant of the CAN (Controller Area Network) bus according to ISO standard 11898-2 may be used. Alternatively, an Ethernet-based bus system such as IEEE 802.03cg can be used. Bus systems implementing the data transmission via optical fibers are also usable. Examples are the MOST Bus (Media Oriented System Transport) or the D2B Bus (Domestic Digital Bus). For inbound and outbound wireless communication, the vehicle is equipped with an on-board connectivity module 160. It can be used for mobile communication, e.g. mobile communication according to the 5G standard.

Reference numeral 172 denotes an engine control unit. Reference numeral 174 denotes an ESC (electronic stability control) unit, whereas reference numeral 176 denotes a transmission control unit. The networking of such control units, all of which are allocated to the category of the drive train, typically occurs with a CAN bus 104. Since various sensors are installed in the motor vehicle and these are no longer only connected to individual control units, such sensor data are also distributed via the bus system 104 to the individual control devices.

Modern vehicles may comprise additional components, such as further sensors for scanning the surroundings, like a LIDAR sensor 186 or a RADAR sensor 182 and additional video cameras 151, e.g. a front camera, a rear camera or side cameras. Such sensors are increasingly used in vehicles for observation of the environment. Further control devices, such as an ADC (automatic driving control) unit 184, etc., may be provided in the vehicle. The RADAR and LIDAR sensors 182, 186 may have a scanning range of up to 250 m, whereas the cameras 150, 151 may cover a range from 30 m to 120 m. The components 182 to 186 are connected to another communication bus 102, e.g. an Ethernet-Bus due to its higher bandwidth for data transport. One Ethernet-bus adapted to the special needs of car communication is standardized in the IEEE 802.1Q specification. Moreover, a lot of information about the environment may be received via V2V (Vehicle-to-Vehicle) communication from other vehicles. Particularly for those vehicles that are not in line of sight to the observing vehicle, it is very advantageous to receive the information about their position and motion via V2V communication.

Reference numeral 190 denotes an on-board diagnosis interface, which is connected to another communication bus 106.

For the purpose of transmitting the vehicle-relevant sensor data via the an on-board connectivity module 160 to another vehicle or to a control center computer, a gateway 90 is provided. This gateway 90 is connected to the different bus systems 100, 102, 104 and 106. The gateway 90 is adapted to convert the data it receives via one bus to the transmission format of another bus so that it can be distributed using the packets specified for the respective other bus. For forwarding this data to the outside, i.e. to another vehicle or to the control central computer, the an on-board connectivity module 160 is equipped with a communication interface to receive these data packets and, in turn, to convert them into the transmission format of the appropriate mobile radio standard.

### Reference numerals

- 10: Establish connection between mobile user device and motor vehicle
- 11: Associate first control button of motor vehicle with application running on mobile user device
- 12: Associate second control button of motor vehicle with head-up display of motor vehicle
- 13: Modify information displayed by application responsive to user input via first control button
- 14: Modify information displayed by head-up display responsive to user input via second control button
- 20: Apparatus
- 21: Interface
- 22: Connecting unit
- 23: Processing unit
- 24: Control unit
- 25: Local storage unit
- 26: User interface
- 30: Apparatus
- 31: Processing device
- 32: Memory device
- 33: Input
- 34: Output
- 40: Motor vehicle
- 41: Steering wheel
- 42: Dashboard
- 43: Head-up display
- 44: Sensor units
- 45: Data transmission unit
- 46: Local storage unit
- 47: Control unit
- 48: Network
- 50: Mobile user device
- 51: Button
- 52: Scroll bar
- 53: Information window
- 54: Further button
- 65: Display Unit
- 66: Data line to display unit
- 67: Computing device
- 70: Input unit
- 75: Data line to input unit
- 80: Memory unit
- 85: Data line to memory unit
- 90: Gateway
- 100: First data bus
- 102: Second data bus
- 104: Third data bus
- 106: Fourth data bus
- 110: Instrument cluster
- 120: Telephone
- 130: Navigation device
- 140: Radio
- 150: Camera
- 151: Further cameras
- 160: On-board connectivity module
- 172: Engine control unit
- 174: Electronic stability control unit
- 176: Transmission control unit
- 182: RADAR sensor
- 184: Automatic driving control unit
- 186: LIDAR sensor
- 190: On-board diagnosis interface
- 410: First control button
- 411: Second control button
- 420: Dedicated area
- 430: Display area
- CS: Control signal
- HMI: User interface
- UI: User input

## Claims

1. A method for controlling display of information in a motor vehicle (40), the method comprising:
- establishing (10) a connection between a mobile user device (50) and the motor vehicle (40) responsive to placing the mobile user device (50) in a dedicated area (420) in a dashboard (42) of the motor vehicle (40);
- associating (11) at least a first control button (410) of the motor vehicle (40) with an application running on the mobile user device (50); and
- modifying (13) information displayed by the application running on the mobile user device (50) responsive to a user input (UI) via the first control button (410); **characterized in that** the method further comprises:
- associating (12) a second control button (411) of the motor vehicle (40) with a head-up display (43) of the motor vehicle (40);
- modifying (14) information displayed by the head-up display (43) responsive to a user input (UI) via the second control button (411); and
- modifying content displayed by the head-up display (43) responsive to a user input (UI) via a user interface (HMI) of the mobile user device (50).

2. The method according to claim 1, wherein the dedicated area (420) is a magnetic area configured to secure the mobile user device (50).

3. The method according to claim 2, wherein the first control button (410) and the second control button (411) are arranged in a steering wheel (41) of the motor vehicle (40).

4. The method according to claim 2 or 3, wherein the first control button (410) and the second control button (411) are configured to be operated by swiping movements.

5. The method according to one of the preceding claims, wherein modifying (13) information displayed by the application running on the mobile user device (50) comprises switching between different application screens.

6. The method according to claim 5, wherein the different application screens include at least a media screen and a navigation screen.

7. The method according to one of claims 2 to 4, wherein modifying (14) information displayed by the head-up display (43) comprises increasing or reducing an amount of information displayed by the head-up display (43).

8. A computer program comprising instructions, which, when executed by a computer, cause the computer to perform a method according to any of claims 1 to 7 for controlling display of information in a motor vehicle (40).

9. An apparatus (20) for controlling display of information in a motor vehicle (40), the apparatus (20) comprising:
- a connecting unit (22) configured to establish (10) a connection between a mobile user device (50) and the motor vehicle (40) responsive to placing the mobile user device (50) in a dedicated area (420) in a dashboard (42) of the motor vehicle (40); and
- a processing unit (23) configured to associate (11) at least a first control button (410) of the motor vehicle (40) with an application running on the mobile user device (50), and to modify (13) information displayed by the application running on the mobile user device (50) responsive to a user input (UI) via the first control button (410); **characterized in that** the processing unit (23) is further configured to associate (12) a second control button (411) of the motor vehicle (40) with a head-up display (43) of the motor vehicle (40), to modify (14) information displayed by the head-up display (43) responsive to a user input (UI) via the second control button (411), and to modify content displayed by the head-up display (43) responsive to a user input (UI) via a user interface (HMI) of the mobile user device (50).

10. A motor vehicle (40), wherein the motor vehicle (40) comprises an apparatus (20) according to claim 9 or is configured to perform a method according to any of claims 1 to 7 for controlling display of information in the motor vehicle (40).

## Patentansprüche

1. Verfahren zum Steuern einer Anzeige von Informationen in einem Kraftfahrzeug (40), das Verfahren umfassend:
- Herstellen (10) einer Verbindung zwischen einer mobilen Benutzervorrichtung (50) und dem Kraftfahrzeug (40) als Reaktion auf ein Platzieren der mobilen Benutzervorrichtung (50) in einem dedizierten Bereich (420) in einem Armaturenbrett (42) des Kraftfahrzeugs (40);
- Verknüpfen (11) mindestens einer ersten Steuertaste (410) des Kraftfahrzeugs (40) mit einer Anwendung, die auf der mobilen Benutzervorrichtung (50) abläuft; und
- Modifizieren (13) von Informationen, die durch die Anwendung angezeigt werden, die auf der mobilen Benutzervorrichtung (50) abläuft, als Reaktion auf eine Benutzereingabe (UI) über die erste Steuertaste (410);
**dadurch gekennzeichnet, dass** das Verfahren ferner umfasst:
- Verknüpfen (12) einer zweiten Steuertaste (411) des Kraftfahrzeugs (40) mit einem Head-up-Display (43) des Kraftfahrzeugs (40);
- Modifizieren (14) von Informationen, die durch das Head-up-Display (43) angezeigt werden, als Reaktion auf eine Benutzereingabe (UI) über die zweite Steuertaste (411); und
- Modifizieren von Inhalt, der durch das Head-up-Display (43) angezeigt wird, als Reaktion auf eine Benutzereingabe (UI) über eine Benutzerschnittstelle (HMI) der mobilen Benutzervorrichtung (50).

2. Verfahren nach Anspruch 1, wobei der dedizierte Bereich (420) ein magnetischer Bereich ist, der konfiguriert ist, um die mobile Benutzervorrichtung (50) zu sichern.

3. Verfahren nach Anspruch 2, wobei die erste Steuertaste (410) und die zweite Steuertaste (411) in einem Lenkrad (41) des Kraftfahrzeugs (40) angeordnet sind.

4. Verfahren nach Anspruch 2 oder 3, wobei die erste Steuertaste (410) und die zweite Steuertaste (411) konfiguriert sind, um durch Wischbewegungen betätigt zu werden.

5. Verfahren nach einem der vorstehenden Ansprüche, wobei das Modifizieren (13) von Informationen, die durch die Anwendung angezeigt werden, die auf der mobilen Benutzervorrichtung (50) abläuft, ein Umschalten zwischen unterschiedlichen Anwendungsbildschirmen umfasst.

6. Verfahren nach Anspruch 5, wobei die unterschiedlichen Anwendungsbildschirme mindestens einen Medienbildschirm und einen Navigationsbildschirm einschließen.

7. Verfahren nach einem der Ansprüche 2 bis 4, wobei das Modifizieren (14) von Informationen, die durch das Head-up-Display (43) angezeigt werden, ein Erhöhen oder ein Reduzieren einer Menge von Informationen umfasst, die durch das Head-up-Display (43) angezeigt werden.

8. Computerprogramm, umfassend Anweisungen, die, wenn sie durch einen Computer ausgeführt werden, den Computer veranlassen, ein Verfahren nach einem der Ansprüche 1 bis 7 zum Steuern der Anzeige von Informationen in einem Kraftfahrzeug (40) durchzuführen.

9. Einrichtung (20) zum Steuern der Anzeige von Informationen in einem Kraftfahrzeug (40), die Einrichtung (20) umfassend:
- eine Verbindungseinheit (22), die konfiguriert ist, um eine Verbindung zwischen einer mobilen Benutzervorrichtung (50) und dem Kraftfahrzeug (40) als Reaktion auf das Platzieren der mobilen Benutzervorrichtung (50) in einem dedizierten Bereich (420) in einem Armaturenbrett (42) des Kraftfahrzeugs (40) herzustellen (10); und
- eine Verarbeitungseinheit (23), die konfiguriert ist, um mindestens eine erste Steuertaste (410) des Kraftfahrzeugs (40) mit einer Anwendung zu verknüpfen (11), die auf der mobilen Benutzervorrichtung (50) abläuft, und um Informationen, die durch die Anwendung angezeigt werden, die auf der mobilen Benutzervorrichtung (50) abläuft, als Reaktion auf eine Benutzereingabe (UI) über die erste Steuertaste (410) zu modifizieren (13);
**dadurch gekennzeichnet, dass** die Verarbeitungseinheit (23) ferner konfiguriert ist, um eine zweite Steuertaste (411) des Kraftfahrzeugs (40) mit einem Head-up-Display (43) des Kraftfahrzeugs (40) zu verknüpfen (12), um Informationen, die durch das Head-up-Display (43) angezeigt werden, als Reaktion auf eine Benutzereingabe (UI) über die zweite Steuertaste (411) zu modifizieren (14) und um Inhalt, der durch das Head-up-Display (43) angezeigt wird, als Reaktion auf eine Benutzereingabe (UI) über eine Benutzerschnittstelle (HMI) der mobilen Benutzervorrichtung (50) zu modifizieren.

10. Kraftfahrzeug (40), wobei das Kraftfahrzeug (40) eine Einrichtung (20) nach Anspruch 9 umfasst oder konfiguriert ist, um ein Verfahren nach einem der Ansprüche 1 bis 7 zum Steuern der Anzeige von Informationen in dem Kraftfahrzeug (40) durchzuführen.

## Revendications

1. Procédé permettant de commander l'affichage d'informations dans un véhicule automobile (40), le procédé comprenant :
- l'établissement (10) d'une connexion entre un dispositif utilisateur mobile (50) et le véhicule automobile (40) en réponse au placement du dispositif utilisateur mobile (50) dans une zone dédiée (420) d'un tableau de bord (42) du véhicule automobile (40) ;
- l'association (11) d'au moins un premier bouton de commande (410) du véhicule automobile (40) à une application s'exécutant sur le dispositif utilisateur mobile (50) ; et
- la modification (13) d'informations affichées par l'application s'exécutant sur le dispositif utilisateur mobile (50) en réponse à une entrée utilisateur (IU) par le biais du premier bouton de commande (410) ;
**caractérisé en ce que** le procédé comprend en outre :
- l'association (12) d'un second bouton de commande (411) du véhicule automobile (40) à un affichage tête haute (43) du véhicule automobile (40) ;
- la modification (14) d'informations affichées par l'affichage tête haute (43) en réponse à une entrée utilisateur (IU) par le biais du second bouton de commande (411) ; et
- la modification du contenu affiché par l'affichage tête haute (43) en réponse à une entrée utilisateur (UI) par le biais d'une interface utilisateur (HMI) du dispositif utilisateur mobile (50).

2. Procédé selon la revendication 1, dans lequel la zone dédiée (420) est une zone magnétique conçue pour fixer solidement le dispositif utilisateur mobile (50).

3. Procédé selon la revendication 2, dans lequel le premier bouton de commande (410) et le second bouton de commande (411) sont agencés dans un volant de direction (41) du véhicule automobile (40).

4. Procédé selon la revendication 2 ou 3, dans lequel le premier bouton de commande (410) et le second bouton de commande (411) sont configurés pour être actionnés par des mouvements de balayage.

5. Procédé selon l'une des revendications précédentes, dans lequel la modification (13) d'informations affichées par l'application s'exécutant sur le dispositif utilisateur mobile (50) comprend le basculement entre différents écrans d'application.

6. Procédé selon la revendication 5, dans lequel les différents écrans d'application comportent au moins un écran multimédia et un écran de navigation.

7. Procédé selon l'une des revendications 2 à 4, dans lequel la modification (14) d'informations affichées par l'affichage tête haute (43) comprend l'augmentation ou la réduction d'une quantité d'informations affichées par l'affichage tête haute (43).

8. Programme informatique comprenant des instructions qui, lorsqu'elles sont exécutées par un ordinateur, amènent l'ordinateur à réaliser un procédé selon l'une quelconque des revendications 1 à 7 permettant de commander l'affichage d'informations dans un véhicule automobile (40).

9. Appareil (20) permettant de commander l'affichage d'informations dans un véhicule automobile (40), l'appareil (20) comprenant :
- une unité de connexion (22) configurée pour établir (10) une connexion entre un dispositif utilisateur mobile (50) et le véhicule automobile (40) en réponse au placement du dispositif utilisateur mobile (50) dans une zone dédiée (420) d'un tableau de bord (42) du véhicule automobile (40) ; et
- une unité de traitement (23) configurée pour associer (11) au moins un premier bouton de commande (410) du véhicule automobile (40) à une application s'exécutant sur le dispositif utilisateur mobile (50), et pour modifier (13) des informations affichées par l'application s'exécutant sur le dispositif utilisateur mobile (50) en réponse à une entrée utilisateur (UI) par le biais du premier bouton de commande (410) ;
**caractérisé en ce que** l'unité de traitement (23) est en outre configurée pour associer (12) un second bouton de commande (411) du véhicule automobile (40) à un affichage tête haute (43) du véhicule automobile (40), pour modifier (14) des informations affichées par l'affichage tête haute (43) en réponse à une entrée utilisateur (IU) par le biais du second bouton de commande (411), et pour modifier un contenu affiché par l'affichage tête haute (43) en réponse à une entrée utilisateur (UI) par le biais d'une interface utilisateur (HMI) du dispositif utilisateur mobile (50).

10. Véhicule automobile (40), le véhicule automobile (40) comprenant un appareil (20) selon la revendication 9 ou étant configuré pour réaliser un procédé selon l'une quelconque des revendications 1 à 7 pour commander l'affichage d'informations dans le véhicule automobile (40).
